(19)

Europäisches Patentamt
European Patent Office
Office européen des brevets

(11) **EP 4 250 395 A1**

(12) **EUROPEAN PATENT APPLICATION**
published in accordance with Art. 153(4) EPC

(43) Date of publication:
**27.09.2023 Bulletin 2023/39**

(21) Application number: **20962493.1**

(22) Date of filing: **20.11.2020**

(51) International Patent Classification (IPC):
**H01M 4/14** *(2006.01)*      **H01M 4/62** *(2006.01)*
**H01M 10/06** *(2006.01)*      **H01M 10/12** *(2006.01)*

(52) Cooperative Patent Classification (CPC):
**H01M 4/14; H01M 4/62; H01M 10/06; H01M 10/12;**
Y02E 60/10; Y02P 70/50

(86) International application number:
**PCT/JP2020/043473**

(87) International publication number:
**WO 2022/107331 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ENTEK Asia Inc**
**Fuwa-gun,**
**Gifu 5032121 (JP)**

(72) Inventor: **SUGIYAMA Shoji**
**Fuwa-gun, Gifu 503-2121 (JP)**

(74) Representative: **Körfer, Thomas**
**Mitscherlich PartmbB**
**Patent- und Rechtsanwälte**
**Karlstraße 7**
**80333 München (DE)**

(54) **PASTING PAPER FOR LEAD ACID STORAGE BATTERIES**

(57)     [Problem] To provide a pasting paper for lead acid batteries compatibly achieving inhibition of electrolyte stratification, a high-rate dischargeability, and charge acceptability in a lead acid battery to be used in an ISS system.

[Means for Resolution] A pasting paper for lead acid batteries, which is a nonwoven fabric composed of an insulating fiber and an electrically conductive material, wherein the average fiber diameter in the nonwoven fabric is 2.0 μm or less, and the coefficient of variation of sheet resistivity of the nonwoven fabric indicating that the electrically conductive material is distributed in a non-uniform manner in the nonwoven fabric is 0.03 or more.

Fig. 1

EP 4 250 395 A1

**Description**

Technical Field

The present invention relates to a pasting paper that comes in contact with a pole plate of a lead acid battery for automobiles mainly used for a recent idling stop-and-start (hereinafter referred to as ISS) system and a long-life lead acid battery used for a communication base station and a stationary backup.

Background Art

In a lead acid battery in recent years, with the spread of the ISS system, the use state of the battery has been such that the electric power is not used only for starting the engine as before, but also is supplied to an electrical system in stopping the engine besides in starting the engine, and thus charging-discharging cycles are performed more frequently than before, and the battery is always not in a state of full charge.

Conventionally, by fully charging the battery, electrolysis of water in an electrolyte occurs, and the electrolyte in the battery is agitated by gas generated through electrolysis of water to cause electrolyte diffusion, so that the specific gravity (concentration) of the electrolyte in the battery is kept uniform. However, in the ISS system, the battery is not in a state of full charge, and therefore, this reaction does not occur, and a difference in the specific gravity (concentration) of the electrolyte in the battery, that is, an electrolyte stratification phenomenon occurs, which is one of the factors that reduce the battery life.

A conventional pasting paper had a problem with durability (protection of fall-off of a pole plate active material in a pole plate pasting step, durability and shape retention against an electrolyte) of the pasting paper itself. In addition, since the fiber diameter was large, the maximum pore size was 100 um or more, and an electrolyte could not be held, and thus, electrolyte stratification could not be effectively prevented.

In PTL 1, a natural fiber that is not resistant to an electrolyte (sulfuric acid solution) is blended in an amount of at least 20%, and therefore, at least 20% of the mass is lost when it is placed in the electrolyte, and it cannot contribute to sufficient prevention of fall-off of the pole plate active material. Further, as a heat sealable fiber, a thick fiber with a fiber diameter per fiber (average fiber diameter) of 1 denier or more is generally used, and therefore, the holding amount of the electrolyte is small, and it cannot contribute to prevention of electrolyte stratification.

In PTL 2, although the resistance of the nonwoven fabric is improved by blending an electrolyte-resistant glass fiber in an amount of 50 wt% or more, the glass fibers used are very thick fibers with a fiber diameter of 5 to 8 um and a fiber diameter of 11 to 14 um, and therefore, it merely plays a role in holding a pole plate of a battery, and it cannot hold the electrolyte, and thus cannot contribute to prevention of electrolyte stratification.

In PTLs 3 and 4, a substitute for a glass mat material as a paste paper that comes in contact with a pole plate is presented, and it is described that as a fiber to be used, a fiber obtained by cutting a fiber with a fiber diameter per fiber (average fiber diameter) of 1 denier (about 8 um) or more produced by a continuous process to a predetermined length is used, and therefore, due to the effect of inhibition of fall-off of an active material of a pole plate or the like, the battery performance is improved. However, the maximum pore size of a nonwoven fabric constituted by the very thick fiber with a fiber diameter per fiber (average fiber diameter) of 8 um or more cannot be measured by a general bubble point method, and it has a large pore size that greatly exceeds the measurement limit of about 100 $\mu$m.

As described above, in an ISS system using a lead acid battery in recent years, a nonwoven fabric having a very large maximum pore size does not have a function to prevent electrolyte stratification.

Therefore, in order to inhibit electrolyte stratification, a nonwoven fabric composed of a fine fiber having a fiber diameter per fiber (average fiber diameter) of 2 um or less is needed, but a conventional wool-like fine glass fiber has a high insulating property. Therefore, although electrolyte stratification can be inhibited, the electrical resistance between pole plates of the battery increases, and thus, properties such as high-rate dischargeability (High-Rate) and charge acceptability decrease (see Japanese Patent No. 2576277).

In particular, in the ISS system, the charging/discharging reaction of a battery is performed frequently, and therefore, improvement of the charge acceptability of the battery is regarded as more important than the dischargeability of the battery.

A lead acid battery to be used in an ISS system in recent years has been required to compatibly achieve inhibition of electrolyte stratification, high-rate dischargeability, and charge acceptability.

Citation List

Patent Literature

PTL 1: Japanese Patent No. 6147736
PTL 2: Japanese Patent No. 6125515
PTL 3: JP-T-2012-519357
PTL 4: JP-A-2015-122339

Summary of Invention

Technical Problem

The present invention is made in view of the above situation, and an object of the present invention is to provide a pasting paper for lead acid batteries compatibly achieving inhibition of electrolyte stratification, high-rate dischargeability, and charge acceptability in a lead acid battery to be used in an ISS system.

Solution to Problem

As a result of extensive and intensive studies for solving the above problem, the pasting paper for lead acid batteries of the present invention is a pasting paper for lead acid batteries having the following features.

(1) A pasting paper for lead acid batteries, which is a nonwoven fabric composed of an insulating fiber and an electrically conductive material, wherein the average fiber diameter in the nonwoven fabric is 2.0 um or less, and the coefficient of variation of sheet resistivity of the nonwoven fabric indicating that the electrically conductive material is distributed in a non-uniform manner in the nonwoven fabric is 0.03 or more.
(2) The pasting paper for lead acid batteries according to the above (1), wherein the blending amount of the electrically conductive material is 1.0% by weight or more and less than 75% by weight.
(3) The pasting paper for lead acid batteries according to the above (1) or (2), wherein the blending amount of the electrically conductive material is 3.0% by weight or more and less than 40% by weight.
(4) The pasting paper for lead acid batteries according to any one of the above (1) to (3), wherein the electrically conductive material is an acid-resistant carbon fiber.
(5) The pasting paper for lead acid batteries according to the above (4), wherein the electrically conductive material is a carbon fiber having a fiber diameter per fiber of 20 um or less and a fiber length per fiber of 6 mm or less.
(6) The pasting paper for lead acid batteries according to the above (5), wherein the electrically conductive material is a carbon fiber having a fiber diameter per fiber of 10 um or less and a fiber length per fiber of 6 mm or less.
(7) The pasting paper for lead acid batteries according to any one of the above (1) to (6), wherein the electrically conductive material is a PAN-based carbon fiber.
(8) The pasting paper for lead acid batteries according to any one of the above (1) to (7), wherein the insulating fiber is a glass fiber.
(9) The pasting paper for lead acid batteries according to any one of the above (1) to (8), wherein as reinforcing materials for the nonwoven fabric, a heat-fusible organic fiber and a cellulose-based fiber are contained in a total amount of 30% by weight or less, and a sulfuric acid-soluble material is contained in an amount of 5% by weight or less.

Advantageous Effects of Invention

It is possible to provide a pasting paper for lead acid batteries compatibly achieving inhibition of electrolyte stratification, a high-rate dischargeability, and charge acceptability in a lead acid battery to be used in an ISS system.

Brief Description of Drawings

[Fig. 1] Fig. 1 is a view showing a relationship between the blending amount of a carbon fiber and the sheet resistivity.
[Fig. 2] Fig. 2 is a view showing a relationship between the blending amount of a carbon fiber and the coefficient of variation of sheet resistivity.

Description of Embodiments

In the present invention, the insulating fiber may be an organic fiber or an inorganic fiber. Preferred examples of the organic fiber include cellulose-based fiber materials, for example, cellulose, cellulose esters such as carboxymethyl cellulose and cellulose acetate, and lignocellulose, neutral mucopolysaccharide fiber materials such as chitin and chitosan, and synthetic resin-based fiber materials composed of a resin, for example, a polyamide such as an aliphatic nylon or an aromatic nylon (aramid), a polyolefin such as polyethylene or polypropylene, vinylon, polyester, polyimide, polyamideimide, polyvinylidene fluoride, or the like, and a synthetic resin-based fiber material composed of an acid-resistant resin, for example, a polyolefin such as polyethylene or polypropylene, vinylon, polyester, polyimide, polyamideimide, polyvinylidene fluoride, or the like is more preferred. Preferred examples of the inorganic fiber include a glass fiber, a silica alumina fiber (ceramic fiber), rock wool, and the like.

In the present invention, a material that is highly resistant to an electrolyte (sulfuric acid) and does not dissolve in the electrolyte (sulfuric acid) is preferred, and a glass fiber that is highly resistant to sulfuric acid and has a high strength (tensile strength of a nonwoven fabric produced) is more preferred.

From the viewpoint of prevention of the maximum pore size in the nonwoven fabric produced from becoming 100 $\mu$m or more, the average fiber diameter of the insulating fiber is preferably 20 $\mu$m or less, more preferably 10 $\mu$m or less, and particularly preferably 4.0 $\mu$m or less.

In the present invention, the electrically conductive material may be particulate or fibrous, but a fibrous material capable of effectively reducing the sheet resistivity is preferred. Examples of the fibrous electrically conductive material include carbon fibers such as a polyacrylonitrile-based (PAN-based) carbon fiber, a rayon-based carbon fiber, a pitch-based carbon fiber, a carbon nanotube, and a vapor-grown carbon fiber (VGCF), electrically conductive fibers obtained by uniformly dispersing a good electrically conductive metal or graphite in a synthetic fiber, for example, a metal-carbon composite material such as a carbon-coated metallic fiber, and the like, a metallic fiber obtained by fiberizing a metal such as stainless steel, an electrically conductive fiber obtained by coating the surface of an organic fiber with a metal, an electrically conductive fiber obtained by coating the surface of an organic fiber with a resin containing an electrically conductive material, and the like.

In the present invention, a material that is highly resistant to sulfuric acid and does not dissolve in the electrolyte (sulfuric acid) is preferred, and a carbon fiber that is highly resistant to sulfuric acid and has a high strength (tensile strength of a nonwoven fabric produced) is preferred, and a PAN-based carbon fiber is more preferred.

From the viewpoint of prevention of the maximum pore size in the nonwoven fabric produced from becoming 100 $\mu$m or more, the average fiber diameter of the electrically conductive material is preferably 20 $\mu$m or less, more preferably 10 $\mu$m or less, and particularly preferably 7 $\mu$m or less.

The average fiber length of the electrically conductive material is preferably 6 mm or less in order to distribute the electrically conductive material in a non-uniform manner in the nonwoven fabric.

In the present invention, it is preferred that the electrically conductive material is distributed in a non-uniform manner in the nonwoven fabric.

When the electrically conductive material is mixed in the insulating fibers in the nonwoven fabric, electricity flows better around the electrically conductive material, so that the reaction between the active material and the electrolyte during discharging proceeds faster than in a region around the insulating fiber, and thus causing a difference in the size of a crystal of lead sulfate to be generated.

In this case, lead sulfate to be generated forms a small crystal (with a large specific surface area) when the reaction rate is fast (around the electrically conductive material), and forms a large crystal (with a small specific surface area) when the reaction rate is slow (around the insulating fiber).

Therefore, in charging in this state, a smaller crystal (with a large specific surface area) is restored to the active material first, so that the crystal of lead sulfate can be restored to the active material without wasting the charging current, and the charge acceptability can be improved.

On the other hand, when the entire nonwoven fabric is an electrically conductive material, although the internal resistance of the entire battery is reduced and the dischargeability is improved, the size (specific surface area) of the crystal of lead sulfate generated during discharging is uniform, and no difference in the reaction (restoration to the active material) during charging occurs, and therefore, no improvement of the charge acceptability can be expected.

In the present invention, evaluation was performed using the coefficient of variation ($\sigma$/AVE) of sheet resistivity as an index indicating the degree to which the electrically conductive material is distributed in a non-uniform manner in the nonwoven fabric.

The coefficient of variation ($\sigma$/AVE) of sheet resistivity was determined by measuring the sheet resistivity at any 10 points with a distance of 50 mm or more between the measurement points, and calculating the average value (AVE) and the standard deviation ($\sigma$).

In the present invention, the coefficient of variation ($\sigma$/AVE) of sheet resistivity is preferably 0.03 or more.

In the present invention, the blending amount of the electrically conductive material is preferably 1.0% by weight or more and less than 75% by weight, and more preferably 3.0% by weight or more and less than 40% by weight.

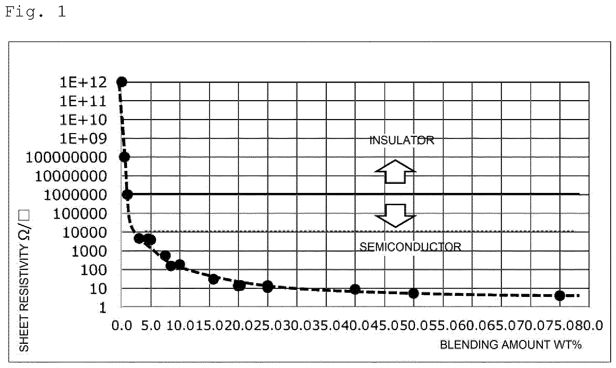

The graph in Fig. 1 shows that the sheet resistivity is reduced by blending a carbon fiber, which is an electrically conductive material, in a glass fiber, which is an insulating fiber. The more the carbon fiber, which is an electrically conductive material, is blended, the more the effect of reducing the resistance value of the entire sheet is exhibited, and the High-Rate property becomes advantageous.

Fig. 1 shows that it is possible to get out of the region of an insulator by setting the blending amount of the carbon fiber, which is an electrically conductive material, to 1.0% by weight or more with respect to the glass fiber, which is an insulating fiber. In addition, by setting the blending amount of the carbon fiber to 3.0% by weight or more, the sheet resistivity is 5000 $\Omega/\square$ or less, and can fall under the region of a semiconductor, and therefore, the High-Rate property becomes more advantageous.

However, when the blending amount of the carbon fiber is set to 75% by weight or more, the average fiber diameter in the nonwoven fabric becomes large, and accompanying this, the maximum pore size in the nonwoven fabric becomes 100 $\mu$m or more, and the ability to hold the electrolyte of the nonwoven fabric decreases, and therefore, sulfuric acid released from the pole plate during charging can no longer be held, causing electrolyte stratification.

In order to prevent the breakage in a battery assembly step, the sheet strength (tensile strength) of the nonwoven fabric to be used for the pasting paper for lead acid batteries of the present invention is preferably 0.2 N/mm$^2$ or more, and more preferably 0.5 N/mm$^2$ or more.

The thickness of the nonwoven fabric is preferably 0.1 to 0.3 mm. When the thickness of the nonwoven fabric is less than 0.1 mm, the total amount of the electrolyte that can be held by the nonwoven fabric decreases, and therefore, the function to prevent electrolyte stratification decreases. When the thickness of the nonwoven fabric is more than 0.3 mm, the distance between the pole plates of the battery becomes larger, and the battery characteristics deteriorate. In this case, for the purpose of maintaining the distance between the pole plates, it is also possible to take measures to reduce the film thickness of the separator to be used in combination, but a risk of causing dendrite short-circuiting early increases, and thus, such measures are not preferred.

Regarding the nonwoven fabric to be used for the pasting paper for lead acid batteries of the present invention, from the viewpoint of prevention of electrolyte stratification, the maximum pore size of the nonwoven fabric is preferably less than 100 um, and more preferably 40 um or less.

In order to maintain the maximum pore size, the average fiber diameter of the fiber in the nonwoven fabric is preferably 2.0 um or less.

In the nonwoven fabric to be used for the pasting paper for lead acid batteries of the present invention, in order to increase the sheet strength (tensile strength), a reinforcing material such as a sulfuric acid-resistant heat-fusible organic fiber or a cellulose fiber may be added as needed. The blending amount of such a reinforcing material is preferably 30% by weight or less. When it is more than 30% by weight, the maximum pore size in the nonwoven fabric becomes 100 um or more, and the ability to hold the electrolyte of the nonwoven fabric decreases, causing electrolyte stratification during charging.

In addition, the total amount of the components, which dissolve in the sulfuric acid solution, of the reinforcing material to be added is preferably 5% by weight or less. If the total amount of the components, which dissolve in the sulfuric acid solution, is more than 5% by weight, when the components are added to the electrolyte, at least 5% by weight of the mass is lost, and it cannot contribute to sufficient prevention of fall-off of the pole plate active material.

Examples

The present invention will be described more specifically below with reference to Examples and Comparative Examples, but the present invention is not to be limited to the following Examples without departing from the gist thereof.

Nonwoven fabrics to be used for pasting papers of Examples 1 to 13 and Comparative Examples 1 to 7 were produced using the following raw materials.

[Blended Raw Materials]

(1) Glass fiber

A: average fiber diameter: 0.6 um (C44, manufactured by JiuQing Dongxiang Glass Product Co., Ltd., China)
B: average fiber diameter: 1.0 um (CMLF208, manufactured by Nippon Sheet Glass Co., Ltd.)
C: average fiber diameter: 4.0 um (CMLF114, manufactured by Nippon Sheet Glass Co., Ltd.)
D: average fiber diameter: 11 um (WS2301-11W, manufactured by Owens Corning Corporation)

(2) Heat-fusible organic fiber: polyester fiber Tepyrus TJ04EN (average fiber diameter: 13 um $\times$ average fiber length: 5 mm), manufactured by Teijin Limited
(3) Cellulose fiber (natural pulp): Celish KY-100G, manufactured by Daicel FineChem Ltd.
(4) Silica (powder): SIPERNAT BG-3, manufactured by Evonik Industries AG
(5) Carbon fiber

A: PAN-based (Pyrofil TR03CMA4G, average fiber diameter: 7 μm × average fiber length: 3 mm, manufactured by Mitsubishi Chemical Corporation)
B: Pitch-based (Donacarbo S-332, average fiber diameter: 18 μm × average fiber length: 5.5 mm, manufactured by Osaka Gas Chemicals Co., Ltd.)

[Production of Nonwoven Fabric]

The nonwoven fabrics to be used for the pasting papers of Examples 1 to 13 and Comparative Examples 1 to 7 were produced by the following procedure according to the formulation shown in Tables 1 to 2.

2.5 g of the raw materials were put in a container of a mixer (National Cooking Mixer MX-915C, manufactured by Matsushita Electric Industrial Co., Ltd.), and 1000 mL of an aqueous sulfuric acid solution of pH 3.0 was added thereto, followed by stirring for 1 minute. 500 mL of the stirred slurry was put in TAPPI (a hand papermaking machine) for experiments, and 5 to 10 L of an aqueous sulfuric acid solution of pH 3.0 was added thereto, followed by stirring. After stirring, a wet-papermaking sheet was produced by dehydration. After the surface was rolled, the sheet was dried by a dryer (drying conditions: 110°C, 60 minutes). Curing was performed for 1 minute by a dryer at 130°C, whereby a nonwoven fabric was produced.

[Methods for Test and Evaluation]

For the Examples and Comparative Examples, evaluation was performed under the following conditions. The results are shown in Tables 1 to 2.

(1) Weight (g/m$^2$)

The produced nonwoven fabric was cut into a size of 200 mm × 250 mm to form a sample. The weight was measured with an electronic balance and taken as the weight (g/m$^2$).

(2) Thickness (mm)

The thickness was measured at the four corners and at the center (5 sites) of the sample (200 mm × 250 mm) using a Peacock thickness gauge under a load of 20 kPa, and the average value of the five measured values was taken as the thickness (mm).

(3) Density (g/m$^3$)

The density (g/m$^3$) was obtained by dividing the weight (g/m$^2$) by the thickness (mm) .

(4) Tensile strength (N/mm$^2$)

The produced nonwoven fabric was cut into a size of 10 mm × 70 mm to form a sample. After the sample was set on a tensile tester in which the chuck distance was set to 50 mm and the tension rate was set to 100 mm/min, the breaking strength was measured and taken as the tensile strength (N/mm$^2$).

(5) Maximum pore size (μm)

The maximum pore size was measured according to a bubble point method.

A test piece having a diameter of 30 mm was punched out from the produced nonwoven fabric to form a sample. After the sample was thoroughly immersed in ethanol so that no air bubbles remained, the sample was set in a measurement device so as to fill the upper part of the sample with ethanol. A pressure was gradually applied from the bottom of the sample, air was blown, and the air pressure was measured with a manometer when air bubbles that passed through the sample came out.

The value of the maximum pore size was calculated according to the following calculation formula.

$$\text{Maximum pore size (μm)} = [4\sigma \times 10^4] / [980 \times (h-H)]$$

σ: surface tension of ethanol
h: reading from manometer (measured value, cm)

H: depth of alcohol on sample (cm)

(6) Average fiber diameter (μm)

On the produced nonwoven fabric (300 mm × 200 mm), an about 5 mm × 5 mm square sample was collected from each of the 9 sites (upper section: 3 sites, middle section: 3 sites, lower section: 3 sites). These samples were photographed with a scanning electron microscope (SEM) (2000 times) and printed out, and then, a line was drawn on the diagonal line of the electron micrograph, and the fiber diameter of a fiber that overlaps with this line was measured with a scale (30 to 40 fibers/sheet × 9 sites = about 350 fibers/sample), and the average value was taken as the average fiber diameter (μm).

(7) Sheet resistivity (Ω/□)

The measurement of the sheet resistivity was performed using a non-contact-type resistivity meter (Model: SRM-14, manufactured by Nagy GmbH) when the sheet resistivity was 800 Ω/□ or less, and using a contact-type resistivity meter (Model: EC-80P, manufactured by Napson Corporation) when the sheet resistivity was more than 800 Ω/□.
In the measurement, the produced nonwoven fabric was cut to a given width, and the resistivity was measured at any 10 sites with a distance of 50 mm or more between the measurement points, and the average value was taken as the sheet resistivity (Ω/□).

(8) Coefficient of variation of sheet resistivity (σ/AVE)

From the sheet resistivity measured at any 10 sites with a distance of 50 mm or more between the measurement points in the produced nonwoven fabric, the average value (AVE) and the standard deviation (σ) were determined by calculation, and the coefficient of variation of sheet resistivity was calculated.

(9) Charge acceptability (good/poor)

The charge acceptability of a battery using the produced nonwoven fabric was evaluated. In a case where a difference of 5% or more was observed compared to pasting papers that were produced using only a glass fiber and do not contain a carbon fiber (Comparative Examples 1 to 3), the charge acceptability was evaluated as "good", and in a case where the difference was less than 5%, the charge acceptability was evaluated as "poor".
Such evaluation results of Examples 1 to 13 and Comparative Examples 1 to 7 are shown in Tables 1 to 2.

[Table 1]

| Item | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Glass fiber | 0.6 $\mu$m | wt% | | | | | | 75.0 | | | 26.1 | 26.1 |
| | 1.0 $\mu$m | | 99.0 | 97.0 | 95.0 | 92.5 | 90.0 | | 75.0 | 60.0 | 39.2 | 39.2 |
| | 4.0 $\mu$m | | | | | | | | | | 3.7 | 3.7 |
| | 11 $\mu$m | | | | | | | | | | | |
| Heat-fusible organic fiber | | | | | | | | | | | 10.3 | 10.3 |
| Natural pulp | | | | | | | | | | | 0.3 | 0.3 |
| Silica (Powder) | | | | | | | | | | | | |
| Carbon fiber | PAN-based | | 1.0 | 3.0 | 5.0 | 7.5 | 10.0 | 25.0 | 25.0 | 40.0 | 20.4 | |
| | Pitch-based | | | | | | | | | | | 20.4 |
| Sheet resistivity | | $\Omega/\square$ | 1E+06 | 4515 | 3837 | 568 | 185 | 10.9 | 14.0 | 8.8 | 14.4 | 4148 |
| Coefficient of variation of sheet resistivity | | $\sigma$/Ave | 0.05 | 0.09 | 0.14 | 0.30 | 0.21 | 0.07 | 0.10 | 0.03 | 0.06 | 0.11 |
| Charge acceptability | | good/ poor | good | good | good | good | good | good | good | good | good | good |
| Weight | | g/m$^2$ | 43 | 43 | 43 | 43 | 42 | 42 | 42 | 42 | 51 | 53 |
| Thickness | | mm | 0.28 | 0.28 | 0.27 | 0.27 | 0.27 | 0.25 | 0.25 | 0.26 | 0.31 | 0.31 |
| Density | | g/m$^3$ | 0.154 | 0.154 | 0.159 | 0.159 | 0.156 | 0.168 | 0.168 | 0.162 | 0.165 | 0.171 |
| Tensile strength | | N/mm$^2$ | 2.8 | 3.0 | 2.2 | 2.4 | 1.7 | 3.0 | 1.5 | 0.5 | 4.8 | 3.9 |
| Maximum pore size | | $\mu$m | 17.2 | 16.8 | 17.6 | 17.1 | 18.4 | 14.6 | 19.1 | 28.0 | 20.5 | 20.7 |
| Average fiber diameter | | $\mu$m | 1.11 | 1.11 | 1.11 | 1.17 | 1.17 | 0.85 | 1.35 | 1.98 | 1.11 | 1.05 |

[Table 2]

| Item | | Unit | Example 11 | Example 12 | Example 13 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Glass fiber | 0.6 $\mu$m | wt% | 28.4 | 27.0 | 25.2 | | | 26.1 | | | | |
| | 1.0 $\mu$m | | 42.4 | 40.8 | 37.3 | 100.0 | 50.0 | 39.2 | 99.5 | 50.0 | 25.0 | |
| | 4.0 $\mu$m | | 4.2 | 4.1 | 3.5 | | 50.0 | 3.7 | | | | |
| | 11 $\mu$m | | | | | | | | | | | 65.0 |
| Heat-fusible organic fiber | | | 11.2 | 10.8 | 10.1 | | | 10.3 | | | | 15.0 |
| Natural pulp | | | 0.4 | 0.3 | 0.3 | | | 0.3 | | | | |
| Silica (Powder) | | | 8.8 | 8.4 | 7.9 | | | 20.4 | | | | |
| Carbon fiber | PAN-based | | 4.6 | 8.4 | 15.7 | 0.0 | 0.0 | 0.0 | 0.5 | 50.0 | 75.0 | 20.0 |
| | Pitch-based | | | | | | | | | | | |
| Sheet resistivity | | $\Omega/\square$ | 4401 | 156 | 30.7 | 1E+12 | 1E+12 | 1E+12 | 1E+08 | 5.5 | 4.1 | 13.5 |
| Coefficient of variation of sheet resistivity | | $\sigma$/Ave | 0.14 | 0.25 | 0.12 | - | - | - | 0.02 | 0.02 | 0.01 | 0.08 |
| Charge acceptability | | good/ poor | good | good | good | poor | poor | poor | poor | poor | poor | good |
| Weight | | g/m$^2$ | 50 | 52 | 56 | 43 | 43 | 54 | 43 | 40 | 40 | 43 |
| Thickness | | mm | 0.27 | 0.28 | 0.31 | 0.27 | 0.24 | 0.28 | 0.28 | 0.25 | 0.29 | 0.28 |
| Density | | g/m3 | 0.185 | 0.186 | 0.181 | 0.159 | 0.179 | 0.193 | 0.154 | 0.160 | 0.138 | 0.154 |
| Tensile strength | | N/mm$^2$ | 0.7 | 0.5 | 0.5 | 2.2 | 1.0 | 0.9 | 2.8 | 0.4 | 0.1 | 1.2 |
| Maximum pore size | | $\mu$m | 18.4 | 20.0 | 23.9 | 17.4 | 24.1 | 15.9 | 16.7 | 36.8 | >100 | >100 |
| Average fiber diameter | | $\mu$m | 0.91 | 0.91 | 0.93 | 1.05 | 2.16 | 0.67 | 1.11 | 2.68 | 5.50 | 12.50 |

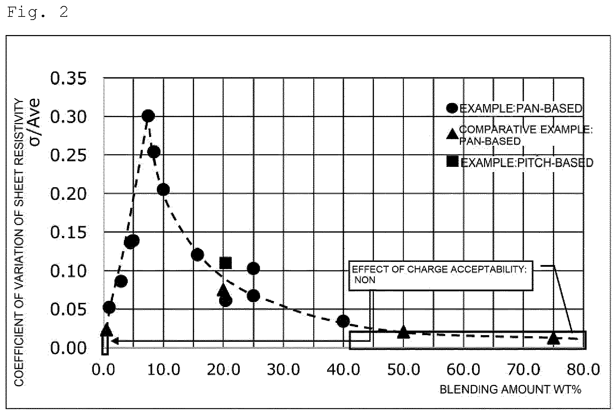

A relationship between the blending amount of the carbon fiber and the coefficient of variation of sheet resistivity ($\sigma$/AVE) obtained from the experimental results of Examples 1 to 13 and Comparative Examples 4 to 7 is shown in Fig. 2.

In Fig. 2, as the blending amount of the carbon fiber increased, the coefficient of variation of sheet resistivity (the degree to which the electrically conductive material is distributed in a non-uniform manner in the nonwoven fabric) increased, and the coefficient of variation of sheet resistivity became maximum when the blending amount was 7.5% by weight. Thereafter, the coefficient of variation of sheet resistivity decreased and became almost constant when the blending amount was 50% by weight or more.

In addition, from Tables 1 to 2 and Fig. 2, it was found that when the carbon fiber used is pitch-based, the sheet resistivity increases as compared to when the PAN-based carbon fiber is used, and the coefficient of variation of sheet resistivity also tends to increase.

It is considered that by distributing the electrically conductive material in a non-uniform manner through adjustment of the blending amount of the carbon fiber, the reaction rate between the active material on the surface of the electrode and the electrolyte was locally varied to cause a difference in the size of lead sulfate generated by the reaction.

Then, lead sulfate generated by the discharging reaction has a property that when the reaction rate is fast, a small crystal with a large specific surface area is formed, and when the reaction rate is slow, a large crystal is formed, and a smaller crystal is restored to the active material first during charging, and therefore, it is considered that the crystal of lead sulfate can be restored to the active material without wasting the charging current, and the charge acceptability can be improved.

As can be seen in the test results of Examples 1 to 13 and Comparative Examples 1 to 7 shown in Tables 1 to 2, it is shown that as compared with conventional pasting papers, the nonwoven fabrics to be used for the pasting papers of Examples have high high-rate dischargeability, and high charge acceptability while maintaining a high sheet strength (tensile strength), an ability to inhibit electrolyte stratification (small maximum pore size), and dischargeability, and it could be confirmed that an excellent pasting paper for lead acid batteries is provided.

**Claims**

1. A pasting paper for lead acid batteries, which is a nonwoven fabric composed of an insulating fiber and an electrically conductive material, wherein the average fiber diameter in the nonwoven fabric is 2.0 um or less, and the coefficient of variation of sheet resistivity of the nonwoven fabric indicating that the electrically conductive material is distributed in a non-uniform manner in the nonwoven fabric is 0.03 or more.

2. The pasting paper for lead acid batteries according to claim 1, wherein the blending amount of the electrically conductive material is 1.0% by weight or more and less than 75% by weight.

3. The pasting paper for lead acid batteries according to claim 1 or 2, wherein the blending amount of the electrically conductive material is 3.0% by weight or more and less than 40% by weight.

4. The pasting paper for lead acid batteries according to any one of claims 1 to 3, wherein the electrically conductive material is an acid-resistant carbon fiber.

5. The pasting paper for lead acid batteries according to claim 4, wherein the electrically conductive material is a carbon fiber having a fiber diameter per fiber of 20 um or less and a fiber length per fiber of 6 mm or less.

6. The pasting paper for lead acid batteries according to claim 5, wherein the electrically conductive material is a carbon fiber having a fiber diameter per fiber of 10 um or less and a fiber length per fiber of 6 mm or less.

7. The pasting paper for lead acid batteries according to any one of claims 1 to 6, wherein the electrically conductive material is a PAN-based carbon fiber.

8. The pasting paper for lead acid batteries according to any one of claims 1 to 7, wherein the insulating fiber is a glass fiber.

9. The pasting paper for lead acid batteries according to any one of claims 1 to 8, wherein as reinforcing materials for the nonwoven fabric, a heat-fusible organic fiber and a cellulose-based fiber are contained in a total amount of 30% by weight or less, and a sulfuric acid-soluble material is contained in an amount of 5% by weight or less.

Fig. 1

Fig. 2

## INTERNATIONAL SEARCH REPORT

| International application No. |
| --- |
| PCT/JP2020/043473 |

**A. CLASSIFICATION OF SUBJECT MATTER**

Int. Cl. H01M4/14(2006.01)i, H01M4/62(2006.01)i, H01M10/06(2006.01)i, H01M10/12(2006.01)i

FI: H01M4/62 B, H01M10/12 K, H01M10/06 L, H01M4/14 Q

According to International Patent Classification (IPC) or to both national classification and IPC

**B. FIELDS SEARCHED**

Minimum documentation searched (classification system followed by classification symbols)

Int. Cl. H01M4/14, H01M4/62, H01M10/06, H01M10/12

Documentation searched other than minimum documentation to the extent that such documents are included in the fields searched

| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-40508 A (JAPAN STORAGE BATTERY CO., LTD.) 08 February 2000 (2000-02-08), entire text, all drawings | 1-9 |
| A | JP 2000-40507 A (JAPAN STORAGE BATTERY CO., LTD.) 08 February 2000 (2000-02-08), entire text, all drawings | 1-9 |
| A | JP 2011-238492 A (NIPPON SHEET GLASS CO., LTD.) 24 November 2011 (2011-11-24), claims | 1-9 |
| A | JP 2019-67526 A (GS YUASA INTERNATIONAL LTD.) 25 April 2019 (2019-04-25), paragraph [0053] | 1-9 |

☐ Further documents are listed in the continuation of Box C.  ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 05.01.2021 | 19.01.2021 |

| Name and mailing address of the ISA/ Japan Patent Office 3-4-3, Kasumigaseki, Chiyoda-ku, Tokyo 100-8915, Japan | Authorized officer  Telephone No. |
| --- | --- |

Form PCT/ISA/210 (second sheet) (January 2015)

**INTERNATIONAL SEARCH REPORT**

Information on patent family members

| International application No. |
| --- |
| PCT/JP2020/043473 |

| Patent Documents referred to in the Report | Publication Date | Patent Family | Publication Date |
| --- | --- | --- | --- |
| JP 2000-40508 A | 08.02.2000 | (Family: none) | |
| JP 2000-40507 A | 08.02.2000 | (Family: none) | |
| JP 2011-238492 A | 24.11.2011 | US 2013/0101887 A1 claims WO 2011/142096 A1 EP 2571079 A1 CN 102884654 A BR 112012028779 A2 | |
| JP 2019-67526 A | 25.04.2019 | EP 3651258 A1 paragraph [0038] CN 111149249 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2576277 B
- JP 6147736 B
- JP 6125515 B
- JP 2012519357 T
- JP 2015122339 A